Europäisches Patentamt

European Patent Office

Office européen des brevets

(11) Veröffentlichungsnummer: **0 454 076 A1**

# (12) EUROPÄISCHE PATENTANMELDUNG

(21) Anmeldenummer: 91106572.0

(22) Anmeldetag: 24.04.91

(51) Int. Cl.⁵: **A23C 1/00**, A23C 1/01, A23C 9/00, A23C 9/16

(30) Priorität: 25.04.90 DE 9004635 U

(43) Veröffentlichungstag der Anmeldung:
30.10.91 Patentblatt 91/44

(84) Benannte Vertragsstaaten:
AT BE CH DE DK ES FR GB GR IT LI LU NL SE

(71) Anmelder: Tapken, Harmannus
Hasenweg 1
W-2909 Bösel(DE)

(72) Erfinder: Tapken, Harmannus
Hasenweg 1
W-2909 Bösel(DE)

(74) Vertreter: Jabbusch, Wolfgang, Dr.
Elisabethstrasse 6
W-2900 Oldenburg(DE)

(54) Trocknungsvorrichtung, insbesondere zur Gewinnung der in einem Flüssigprodukt enthaltenen Trockensubstanz.

(57) Eine Trocknungsvorrichtung, insbesondere zur Gewinnung der in einem Flüssigprodukt enthaltenen Trockensubstanz, vorzugsweise zur Trocknung von Nahrungsmittelflüssigkeiten, wie Flüssigei, Milch oder dergleichen, umfaßt wenigstens eine Trocknungskammer, in die das zu trocknende Produkt durch einen Produkteinlaß einbringbar ist. Der Innenraum der Trocknungskammer ist im wesentlichen rotationssymmetrisch bezüglich einer Symmetrieachse ausgebildet. In der Trocknungskammer ist wenigstens ein Verwirbelungselement angeordnet, welches um die Symmetrieachse rotierend antreibbar ist und sich im wesentlichen parallel zur Innenwandung der Trocknungskammer erstreckt. Vorzugsweise ist das Verwirbelungselement ein sich über die Länge der Trocknungskammer erstreckendes Stahlseil, das auch als Abstreifelement dient.

Fig 1

Die Erfindung betrifft eine Trocknungsvorrichtung, insbesondere zur Gewinnung der in einem Flüssigprodukt enthaltenen Trockensubstanz, vorzugsweise zur Trocknung von Nahrungsmittelflüssigkeiten, wie Flüssigei, Milch oder dergleichen, umfassend wenigstens eine Trocknungskammer, in die das zu trocknende Produkt durch einen Produkteinlaß einbringbar ist.

Auf dem Gebiet der Trocknung von Nahrungsflüssigkeiten, insbesondere bei der Gewinnung von Trockenmilch, werden bisher im wesentlichen zwei Verfahren mit entsprechenden Vorrichtungen verwendet.

Es gibt die sogenannte Walzenmilch, die dadurch gewonnen wird, daß eingedampfte Milch auf von innen geheizte, sich drehende Blechtrommeln auffließt.

Häufiger wird sogenannte Sprühmilch gewonnen, indem Milch in Nebelform in heiße Luft versprüht wird. Bei dieser Sprühtrocknung wird in einen Turm Nahrungsflüssigkeit von oben unter Druck herabgesprüht. Von unten wird Heißluft in den Turm geführt, die den in der Flüssigkeit enthaltenen Wasserdampf nach oben transportiert, während das Nahrungsprodukt in Pulverform nach unten fällt.

Diese Verfahrensweise erfordert eine Trocknungsvorrichtung mit hohen Anschaffungskosten und hohen Betriebskosten, insbesondere wegen des relativ hohen Energieverbrauches. Das Sprühtrocknungsverfahren kann daher wirtschaftlich nur bei großen Produktionsverfahren mit großen Produktionsmengen eingesetzt werden, z.B. in großen Molkereien zur Herstellung von Trockenmilch.

Ausgehend von diesem Stand der Technik, liegt der Erfindung die Aufgabe zugrunde, eine Trocknungsvorrichtung zu schaffen, die wirtschaftlicher erstellbar und betreibbar ist, insbesondere auch zur Trocknung von kleineren Produktmengen.

Diese Aufgabe wird erfindungsgemäß dadurch gelöst, daß der Innenraum der Trocknungskammer im wesentlichen rotationssymmetrisch bezüglich einer Symmetrieachse ausgebildet ist und daß in der Trocknungskammer wenigstens ein Verwirbelungselement angeordnet ist, welches um die Symmetrieachse rotierend antreibbar ist.

Bei der erfindungsgemäßen Trocknungsvorrichtung ist keine aufwendige Sprühtechnik zur Trocknung der Produkte notwendig. Vielmehr wird das zu trocknende Produkt durch den Produkteinlaß einfach in das Innere der Trocknungskammer eingebracht und dort mit einem erfindungsgemäßen Verwirbelungselement verwirbelt. Diese erfindungsgemäße Verwirbelung begünstigt den Trocknungsprozeß des zu trocknenden Produktes in der Trocknungskammer, insbesondere, weil hierdurch die dem Trocknungsprozeß ausgesetzte Oberfläche des Produktes vergrößert wird.

Außerdem kann mit dem Verwirbelungselement dem zu trocknenden Produkt ein Vorwärtsdrall erteilt werden, so daß durch das Verwirbelungselement das Produkt innerhalb der Trocknungskammer weiterbefördert wird und somit von einem Ende der Trocknungskammer zur anderen gelangt.

Die für den Trocknungsprozeß notwendige Heizung kann an und für sich in beliebiger Weise erfolgen. Vorzugsweise wird jedoch die Trocknungskammer von außen beheizt.

Das Verwirbelungselement erstreckt sich vorzugsweise im wesentlichen parallel zur Innenwandung der Trocknungskammer. Dabei erstreckt es sich vorzugsweise über die Länge der Trocknungskammer.

Auf diese Weise kann mit Vorteil ein- und dasselbe Verwirbelungselement über die gesamte Länge bzw. einen Teilabschnitt der Länge der Trocknungskammer wirksam sein. Die Länge der Trocknungskammer wird dadurch besser ausgenutzt, insbesondere kann das zu trocknende Produkt durch das Verwirbelungselement durch die gesamte Länge der Trocknungskammer getrieben werden.

Eine nächste Weiterbildung der Erfindung sieht vor, daß das Verwirbelungselement als Abstreifelement bei seiner Rotation um die Symmetrieachse an der Innenwandung umläuft. Hierdurch wird verhindert, daß sich das zu trocknende Produkt aufgrund seiner ihm vom Verwirbelungselement erteilten Fliehkraft an der Innenwandung der Trocknungskammer festsetzt und dort aufgrund der Hitze anbrennt. Durch das Verwirbelungselement wird die Innenwandung gereinigt, indem das an der Innenwandung haftende Produkt von der Innenwandung abgestreift bzw. abgeschlagen wird. Auch das Verwirbelungselement selbst reinigt sich hierdurch selbst.

Das Verwirbelungselement ist bevorzugt weitgehend strangförmig ausgebildet. Vorzugsweise wird als Verwirbelungselement ein Seil verwendet. Dieses Seil wird vorzugsweise aus nicht rostendem Stahl, beispielsweise aus V4A-Stahl, gefertigt.

Ein solches Seil läßt sich in einfacher Weise straff spannen und bei einem eventuellen Verschleiß leicht auswechseln. Ein Seil schwingt außerdem während seines Umlaufes, so daß es selbstreinigend das an ihm haftende Produkt quasi abschüttelt. Es wird zudem ein guter Verwirbelungseffekt erzielt, wenn das zu trocknende Flüssigprodukt ständig von einem Seil durchschlagen wird.

Eine nächste Weiterbildung der Erfindung sieht vor, daß mehrere Verwirbelungselemente vorgesehen sind, die zusammen rotierend antreibbar sind. Der Verwirbelungseffekt wird hierdurch mit Vorteil erhöht. Hierdurch erhöht sich der Wirkungsgrad der Trocknungsvorrichtung.

Eine bevorzugte Ausbildung der Trocknungsvorrichtung zeichnet sich dadurch aus, daß an den Stirnseiten der Trocknungskammer über eine entlang der Symmetrieachse verlaufenden Antriebswelle miteinander verbundene Antriebsköpfe angeordnet sind, an denen die Verwirbelungselemente mit ihren Enden befestigt sind, wobei die Verwirbelungselemente entlang des Umfanges der Trocknungskammer in regelmäßigen Abständen verteilt angeordnet sind.

Vorzugsweise werden also zwischen den Antriebsköpfen strangförmige Verwirbelungselemente gespannt, die durch die Antriebsköpfe angetrieben werden. Diese Verwirbelungselemente bilden somit mit den Antriebsköpfen, die beispielsweise scheibenförmig ausgebildet sein könnten, eine Art umlaufende Gittertrommel. Die strangförmigen Verwirbelungselemente können Seile oder auch Stangen sein. Sind die Verwirbelungselemente starr, beispielsweise Stangen, so kann unter Umständen auf die zentrale Antriebswelle verzichtet werden. Es ist dann gegebenenfalls nur erforderlich, beide Antriebsköpfe rotierend zu lagern und einen der Antriebsköpfe mit einem Antriebsaggregat zu verbinden. Die Verbindung der beiden Antriebsköpfe erfolgt dann unter Umständen ausreichend über die Verwirbelungselemente selbst.

Die Antriebsköpfe können bei einer einfachen Ausbildung jeweils Kreuzgestänge sein, an deren Armen insgesamt vier Verwirbelungselemente angeordnet sind. Es ist auch eine größere Anzahl von Verwirbelungselementen denkbar. Insbesondere ist es denkbar, Verwirbelungselemente in unterschiedlichen radialen Abständen zur Symmetrieachse anzuordnen.

Bei einer bevorzugten Ausbildung ist die Trocknungskammer stirnseitig über Flansche luftdicht abgeschlossen, wobei die Antriebsköpfe mit den Verwirbelungselementen eingeschlossen sind. Mit der erfindungsgemäßen Trocknungsvorrichtung ist also mit Vorteil eine Trocknung unter Luftabschluß möglich. Dies ist beispielsweise unter hygienischen Gesichtspunkten bei der Verarbeitung von Nahrungsmittelflüssigkeiten von Vorteil. Außerdem wird hierdurch die Heizenergie besser genutzt.

Eine nächste Weiterbildung der Erfindung, für die auch selbständiger Schutz beansprucht wird, sieht vor, daß die Trocknungskammer etwa waagerecht angeordnet ist. Der Vortrieb des Produktes durch die Trocknungskammer wird auch bei dieser Lage der Trocknungskammer mit Vorteil durch die Verwirbelungselemente bzw. das Verwirbelungselement erreicht. Die waagerechte Anordnung hat beispielsweise den Vorteil, daß die Trocknungskammer in dieser Lage von außen sehr viel leichter beheizt werden kann. Auch ist eine solche Trocknungsvorrichtung, wenn sie für die Verarbeitung relativ geringerer Produktmengen vorgesehen ist, in einfacher Weise raumsparend anordbar und wirtschaftlich erstellbar. Beispielsweise könnte eine solche Trocknungsvorrichtung zur Trocknung von Flüssigei direkt in einem Brutbetrieb bzw. in einem Legehennenbetrieb aufgestellt werden.

Die Trocknungskammer ist vorzugsweise weitgehend rohrförmig ausgebildet.

Eine nächste Weiterbildung der Erfindung, die auch als unabhängige Lösung der gestellten Aufgabe angesehen wird und für die auch selbständiger Schutz beansprucht wird, sieht vor, daß die Trocknungskammer konisch bzw. trichterförmig ausgebildet ist.

Die Trichterform der Trocknungskammer begünstigt, insbesondere auch bei waagerechter Anordnung der Trocknungskammer, das Wandern des zu trocknenden Produktes durch die Trocknungskammer von der Seite geringeren Durchmessers zu der Seite größeren Durchmessers der Trichterform. Insbesondere der Verwirbelungseffekt durch das oder die Verwirbelungselemente wird begünstigt. Die von dem Verwirbelungselement dem zu trocknenden Produkt erteilte Fliehkraft bzw. der erteilte Drall führt zudem mit Vorteil dazu, daß das zu trocknende Produkt in den Bereich größeren Durchmessers vorwärts getrieben wird.

Bei der erfindungsgemäßen Trocknungsvorrichtung könnte zudem ein Zykloneffekt bewußt herbeigeführt und ausgenutzt werden.

Der Produkteinlaß der Trocknungskammer befindet sich vorzugsweise im Bereich des geringeren Durchmessers der Trocknungskammer und ein Produktauslaß befindet sich vorzugsweise im Bereich des größeren Durchmessers. Im Bereich des Produktauslasses ist vorzugsweise ein Abförderelement, beispielsweise eine Förderschnecke vorgesehen, die das trockene Produkt aus der Trocknungskammer herausfördert.

Für die Trocknungskammer wird zur Aufheizung eine Heizeinrichtung vorgesehen. Es handelt sich hierbei vorzugsweise um eine Heißluftkammer, die sich wenigstens über einen Abschnitt der Länge der Trocknungskammer erstreckt. Zur Aufheizung der Heißluftkammer kann beispielsweise ein Gebläsebrenner oder dergleichen vorgesehen sein. Die Brennertemperatur kann dabei etwa 1000 $^\circ$C betragen. Im Inneren der Trocknungskammer soll vorzugsweise eine Temperatur von etwa 130 $^\circ$C vorherrschen. Dies insbesondere dann, wenn Flüssigei getrocknet werden soll, da bei dieser Temperatur das zu Pulver werdende Eiweiß keimfrei hergestellt bzw. gewonnen werden kann.

Im Innenraum der Trocknungskammer wird zudem vorzugsweise ein Innendruck von ca. 2,5 atü aufrechterhalten. Der Überdruck kann mit Hilfe eines Überdruckventils geregelt werden. Die angesprochene Förderschnecke gewährleistet eine Abförderung, ohne daß der Überdruck beeinträchtigt wird bzw. zusammenbricht. Mit der Förderschnekke wird das getrocknete Gut aus der Trocknungskammer gepreßt. Selbstverständlich kann auch mit Unterdruck in der Trocknungskammer gearbeitet werden, insbesondere dann, wenn temperaturempfindliche Produkte getrocknet werden sollen. Dabei kann an die Trocknungskammer eine Vakuum erzeugende Einrichtung angeschlossen sein.

Eine nächste Weiterbildung der Erfindung sieht vor, daß die Trocknungskammer einen Wasserdampf-Abzug aufweist. Durch diesen Abzug wird der Wasserdampf abgezogen, der bei der Trocknung des Produktes frei wird. Bei einer bevorzugten Weiterbildung der Erfindung wird dieser Wasserdampf für die Vorwärmung des zu trocknenden Produktes und/oder eines Abschnittes der Trocknungskammer im Rahmen einer Wärmerückgewinnung mit Vorteil genutzt. Auch dies führt zu einer Energieersparnis.

Bei der erfindungsgemäßen Trocknungsvorrichtung läuft das Verwirbelungselement vorzugsweise mit etwa 1200 Umdrehungen pro Minute um.

Mit der erfindungsgemäßen Trocknungsvorrichtung ist es insbesondere mit Vorteil möglich, hochwertige Tiernahrung in Pulverform keimfrei herzustellen. Der Einsatz der Vorrichtung ist bei kleineren und bei größeren Produktionsmengen denkbar. Die Vorrichtung ist somit auch für einen Einsatz bei Kleinverbrauchern geeignet.

Es sind vielfältige Anwendungsmöglichkeiten der erfindungsgemäßen Trocknungsvorrichtung denkbar, wie z.B. die Trocknung von Kartoffelabfällen, die z.B. bei der Herstellung von Pommes frites anfallen, oder auch die Trocknung von Gülle oder Klärschlamm.

Die Wärmerückgewinnung aufgrund der Rückgewinnung des Wasserdampfes bei der Trocknung könnte, insbesondere auch bei Kleinverbrauchern, anderweitig genutzt werden, beispielsweise zur Beheizung des Stalles oder dergleichen.

Ausführungsbeispiele, aus denen sich weitere erfinderische Merkmale ergeben, sind in der Zeichnung dargestellt. Es zeigen:

Fig. 1    einen Längsschnitt durch eine erfindungsgemäße Trocknungsvorrichtung,

Fig. 2    einen Querschnitt der Trocknungsvorrichtung gemäß Fig. 1 entlang der in Fig. 1 mit II-II bezeichneten strichpunktierten Linie,

Fig. 3    eine Seitenansicht der Trocknungskammer gemäß Fig. 1 in einem vergrößertem Maßstab und

Fig. 4    ein zweites Ausführungsbeispiel einer erfindungsgemäßen Trocknungsvorrichtung im Längsschnitt entsprechend der Fig. 1.

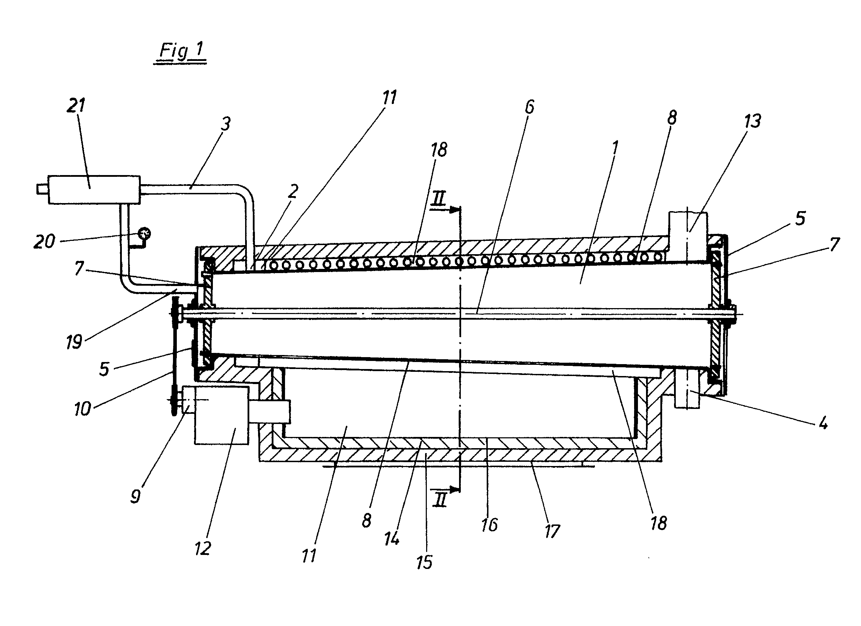

Fig. 1 zeigt einen Längsschnitt durch eine erfindungsgemäße Trocknungsvorrichtung.

Die Trocknungsvorrichtung umfaßt eine konisch bzw. trichterförmig ausgebildete Trocknungskammer 1.

In die Trocknungskammer, und zwar im Bereich des geringeren Durchmessers der Trocknungskammer 1 führt ein Produkteinlaß 2 mit Zuleitung 3 zur Einbringung des zu trocknenden, flüssigen Produktes in die Trocknungskammer 1.

Das getrocknete Produkt wird durch einen Auslaß 4, der im Bereich des größeren Durchmessers der Trocknungskammer 1 angeordnet ist, aus der Trocknungskammer 1 hinausbefördert. Hierfür kann in diesem Bereich eine Förderschnecke vorgesehen sein, die das trockene Produkt bzw. die Trockensubstanz durch den Auslaß 4 preßt.

Mit Stirnflanschen 5 ist die Trocknungskammer 1 luftdicht verschlossen. Durch die Stirnflansche 5 führt eine Antriebswelle 6. Auf dieser Antriebswelle sitzen drehfest kreuzförmige Antriebsköpfe 7, zwischen denen vier Stahlseile 8 als Verwirbelungselemente zur Verwirbelung des zu trocknenden Produktes in der Trocknungskammer 1 gespannt sind. Die Stahlseile 8 verlaufen entlang der Innenwandung der Trocknungskammer 1 und fungieren gleichzeitig als Abstreifelemente zur Beseitigung von festgesetzten Resten an der Innenwandung.

Der Antrieb der Antriebswelle 6 zur Rotation der Stahlseile 8 um die Antriebswelle 6 erfolgt über ein Antriebsaggregat 9, welches über einen Keilriemen 10 mit der Antriebswelle 6 verbunden bzw. gekoppelt ist.

Die Stahlseile 8 sind an den Antriebsköpfen 7 derart angeordnet, daß sie nach Lösen der Stirnflansche 5 leicht abmontiert und ausgewechselt werden können.

Um die Trocknungskammer 1 herum führt eine Heißluftkammer 11 zur Beheizung der Trocknungskammer 1 von außen. Diese Heißluftkammer erstreckt sich über einen Teilbereich entlang der Trocknungskammer 1. Wärmequelle ist ein Brenner 12, der die Luft in der Heißluftkammer 11 mit einer Flamme erwärmt. Dabei beträgt die Brennertemperatur vorzugsweise ca. 1000 °C, die Temperatur innerhalb der Trocknungskammer vorzugsweise etwa 130 °C. Abgase des Brenners 12 werden durch einen Schornstein 13 abgeleitet.

Die Heißluftkammer 11 ist unter Einschluß der Trocknungskammer 1 mit einer doppelten Isolierung bestehend aus zwei Isolierschichten 14,15 und Isolierblechen 16,17 wärmeisoliert.

Um die trichterförmige Trocknungskammer 1 herum sind 24 Flacheisen 18 in Längsrichtung der Trocknungskammer angeordnet, vorzugsweise angeschweißt. In den Flacheisen 18 befinden sich Lochungen. Diese Flacheisen 18 tragen zum einen zur Stabilität der Trocknungskammer bei, zum anderen zur gleichmäßigen Aufheizung der Trocknungskammer 1.

Schließlich verfügt die Trocknungskammer 1 über einen Wasserdampfabzug 19, der durch ein Überdruckventil 20 kontrolliert wird. Mittels eines Wärmetauschers 21 kann der aus der Trocknungskammer abgezogene Wasserdampf einen Teil seiner Wärme an das zu trocknende Produkt in der Zuleitung 3 zur Vorerwärmung dieses Produktes abgeben. Hierdurch ist eine energiesparende Wärmerückgewinnung gegeben.

In der Trocknungskammer 1 herrscht vorzugsweise ein Überdruck von 2,5 atü, welcher mit dem Überdruckventil 20 kontrolliert wird.

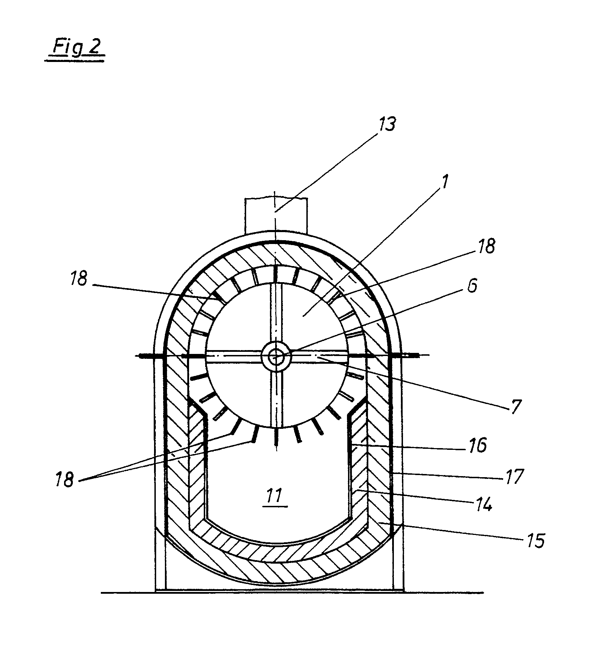

Fig. 2 zeigt einen Querschnitt der Trocknungsvorrichtung gemäß Fig. 1 entlang der in Fig. 2 mit II-II bezeichneten strichpunktierten Linie.

In der Fig. 2 sind dieselben Bauelemente mit denselben Bezugszahlen bezeichnet wie in Fig. 1.

Aus der Fig. 2 ist insbesondere die Formgebung der Heißluftkammer 11, die Anordnung der Flacheisen 18 und die Ausbildung der kreuzförmigen Antriebsköpfe 7 zu entnehmen.

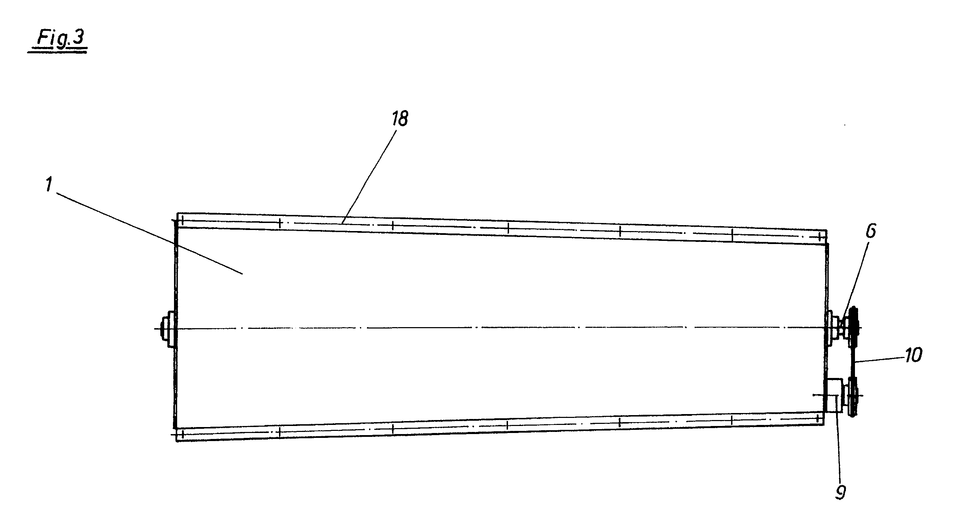

Fig. 3 zeigt eine Seitenansicht der Trocknungskammer 1 der Trocknungsvorrichtung gemäß Fig. 1. Auch in dieser Figur sind die gleichen Bauelemente mit den gleichen Bezugszahlen bezeichnet, wie in den vorhergehenden Figuren.

Aus dieser Fig. 3 ist noch einmal die konische Form bzw. Trichterform der Trocknungskammer 1 zu entnehmen.

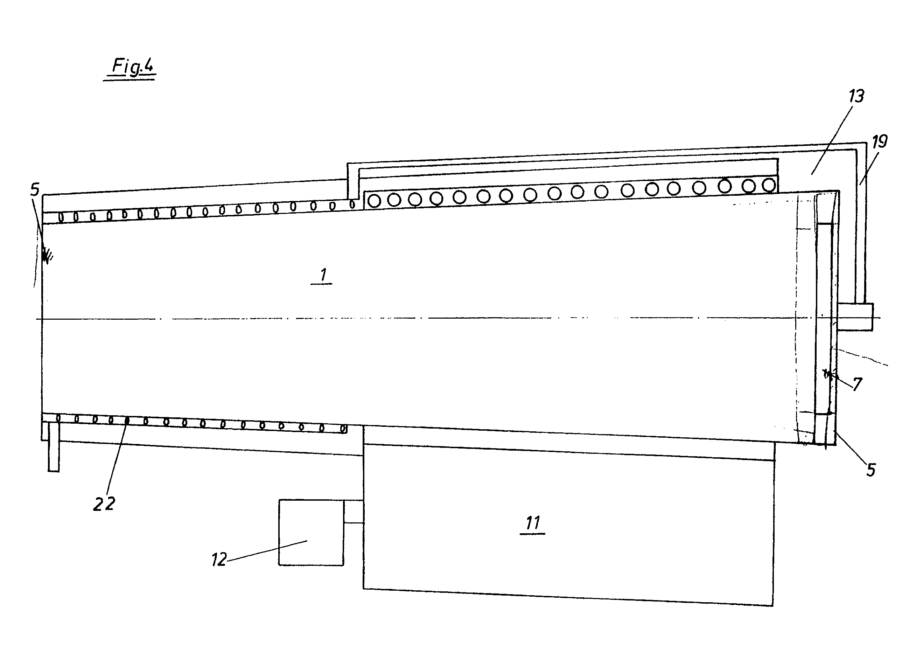

Fig. 4 zeigt vereinfacht eine zweite Ausführungsform einer erfindungsgemäßen Trocknungsvorrichtung. Diese Trocknungsvorrichtung stimmt in den wesentlichen Teilen mit der Trocknungsvorrichtung gemäß Fig. 1 überein. Geändert ist hier lediglich die Abführung des abgezogenen Wasserdampfes. Der Wasserdampf wird bei dieser Ausführungsform dafür eingesetzt, den ersten Abschnitt der Trocknungskammer 1 selbst über einen Wärmetauscher 22 vorzuheizen, und zwar im Einlaßbereich der Kammer, vorgelagert vor der eigentlichen Heißluftkammer 11. Auch hierdurch ist eine gute Wärmerückgewinnung und Wärmenutzung möglich.

**Patentansprüche**

1.  Trocknungsvorrichtung, insbesondere zur Gewinnung der in einem Flüssigprodukt enthaltenen Trockensubstanz, vorzugsweise zur Trocknung von Nahrungsmittelflüssigkeiten, wie Flüssigei, Milch oder dergleichen, umfassend wenigstens eine Trocknungskammer, in die das zu trocknende Produkt durch einen Produkteinlaß einbringbar ist,
    dadurch gekennzeichnet,
    daß der Innenraum der Trocknungskammer (1) im wesentlichen rotationssymmetrisch bezüglich einer Symmetrieachse ausgebildet ist und daß in der Trocknungskammer (1) wenigstens ein Verwirbelungselement (Stahlseil 8) angeordnet ist, welches um die Symmetrieachse rotierend antreibbar ist.

2.  Trocknungsvorrichtung nach Anspruch 1, dadurch gekennzeichnet, daß sich das Verwirbelungselement im wesentlichen parallel zur Innenwandung der Trocknungskammer (1) erstreckt.

3.  Trocknungsvorrichtung nach Anspruch 2, dadurch gekennzeichnet, daß das Verwirbelungselement sich über die Länge der Trocknungskammer (1) erstreckt.

4.  Trocknungsvorrichtung nach einem der vorhergehenden Ansprüche, dadurch gekennzeichnet, daß das Verwirbelungselement als Abstreifelement bei seiner Rotation um die Symmetrieachse an der Innenwandung der Trocknungskammer (1) umläuft.

5.  Trocknungsvorrichtung nach einem der vorhergehenden Ansprüche, dadurch gekennzeichnet, daß das Verwirbelungselement weitgehend strangförmig ausgebildet ist.

6.  Trocknungsvorrichtung nach Anspruch 5, dadurch gekennzeichnet, daß das Verwirbelungselement ein Seil (8), vorzugsweise aus (nichtrostendem) Stahl, ist.

7.  Trocknungsvorrichtung nach einem oder mehreren der vorhergehenden Ansprüche, dadurch gekennzeichnet, daß mehrere Verwirbelungselemente vorgesehen sind, die zusammen rotierend antreibbar sind.

8.  Trocknungsvorrichtung nach Anspruch 3 und 7, dadurch gekennzeichnet, daß an den Stirnseiten der Trocknungskammer (1) über eine entlang der Symmetrieachse verlaufende Antriebswelle (6) miteinander verbundene Antriebsköpfe (7) angeordnet sind, an denen die Verwirbelungselemente mit ihren Enden befestigt sind, wobei die Verwirbelungselemente entlang des Umfanges der Trocknungskammer (1) in regelmäßigen Abständen verteilt angeordnet sind.

9.  Trocknungsvorrichtung nach Anspruch 8, dadurch gekennzeichnet, daß vier Verwirbelungselemente vorgesehen sind und daß die Antriebsköpfe (7) jeweils Kreuzgestänge sind.

10.  Trocknungsvorrichtung nach Anspruch 8 oder 9, dadurch gekennzeichnet, daß unter Einschluß der Antriebsköpfe (7) die Trocknungskammer (1) stirnseitig über Flansche (5) luftdicht abgeschlossen ist.

11. Trocknungsvorrichtung, insbesondere nach einem oder mehreren der vorhergehenden Ansprüche, dadurch gekennzeichnet, daß die Trocknungskammer (1) etwa waagerecht angeordnet ist.

12. Trocknungsvorrichtung nach einem oder mehreren der vorhergehenden Ansprüche, dadurch gekennzeichnet, daß die Trocknungskammer (1) weitgehend rohrförmig ausgebildet ist.

13. Trocknungsvorrichtung, insbesondere zur Gewinnung der in einem Flüssigprodukt enthaltenen Trockensubstanz, vorzugsweise nach einem oder mehreren der vorhergehenden Ansprüche, dadurch gekennzeichnet, daß die Trocknungskammer (1) konisch bzw. trichterförmig ausgebildet ist.

14. Trocknungsvorrichtung nach Anspruch 13, dadurch gekennzeichnet, daß sich der Produkteinlaß (2) im Bereich des geringeren Durchmessers der Trocknungskammer (1) befindet und daß sich im Bereich des größeren Durchmessers ein Produktauslaß (4) für das getrocknete Produkt befindet.

15. Trocknungsvorrichtung nach Anspruch 14, dadurch gekennzeichnet, daß im Bereich des Produktauslasses (4) eine Förderschnecke angeordnet ist.

16. Trocknungsvorrichtung nach einem oder mehreren der vorhergehenden Ansprüche, gekennzeichnet durch eine Heizeinrichtung zur Aufheizung der Trocknungskammer (1).

17. Trocknungsvorrichtung nach Anspruch 16, dadurch gekennzeichnet, daß die Heizeinrichtung eine Heißluftkammer (11) aufweist, die sich wenigstens über einen Abschnitt der Länge der Trocknungskammer (1) erstreckt.

18. Trocknungsvorrichtung nach einem oder mehreren der vorhergehenden Ansprüche, dadurch gekennzeichnet, daß die Trocknungskammer (1) einen Wasserdampf-Abzug (19) aufweist.

19. Trocknungsvorrichtung nach Anspruch 18, dadurch gekennzeichnet, daß der Wasserdampf-Abzug (19) mit einem die zum Produkteinlaß (2) führende Produktzuleitung (3) kontaktierenden Wärmetauscher (21) verbunden ist.

20. Trocknungsvorrichtung nach Anspruch 17 und 18 oder 19, dadurch gekennzeichnet, daß der Wasserdampf-Abzug (19) mit einem die Trocknungskammer (1) kontaktierenden, dem Heißluftkammerabschnitt vorgeordneten Wärmetauscher (22) verbunden ist.

Fig 1

<u>*Fig 2*</u>

Fig.3

Fig.4

EP 0 454 076 A1

Europäisches
Patentamt

**EUROPÄISCHER
RECHERCHENBERICHT**

Nummer der Anmeldung

**EP 91 10 6572**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 417 697   (Y. SAIKI et al.) <br> * Figur 1; Zusammenfassung; Ansprüche 1-13 * <br> – – – | 1 | A 23 C 1/00 <br> A 23 C 1/01 <br> A 23 C 9/00 <br> A 23 C 9/16 |
| A | DD-A-1 155 69   (AKTIESELSKABET NIRO ATOMIZER) <br> * Ansprüche 1-6 * <br> – – – | 1 | |
| A | GB-A-1 357 928   (KRAFTCO CORP.) <br> * Figur; Ansprüche 1-6 * <br> – – – | 1 | |
| A | PATENT ABSTRACTS OF JAPAN Band 4, Nr. 124 <br> (C-23)(606), 2. September 1980; <br> & JP - A -5579002 (YUKIJIRUSHI NIYUUGIYOU K.K.) <br> 14.06.1980 <br> – – – – – | | |

|  | RECHERCHIERTE SACHGEBIETE (Int. Cl.5) |
|---|---|
| | A 23 C 1/00 <br> A 23 C 9/00 |

Der vorliegende Recherchenbericht wurde für alle Patentansprüche erstellt

| Recherchenort | Abschlußdatum der Recherche | Prüfer |
|---|---|---|
| Berlin | 11 Juli 91 | SCHULTZE D |